# EUROPEAN PATENT SPECIFICATION

(11) **EP 1 296 434 B1**
(45) Date of publication and mention of the grant of the patent: **28.11.2007**
(21) Application number: 02019467.6
(22) Date of filing: 30.08.2002
(51) Int. Cl.: H05K 7/18

(54) **Communication device power supplying structure**
Stromversorgungstruktur für Kommunikationsgerät
Structure d'alimentation de puissance pour un dispositif de communication

(30) Priority: 03.09.2001 JP 2001266357
(43) Date of publication of application: 26.03.2003
(73) Proprietor: NEC CORPORATION, Tokyo (JP)
(72) Inventor: Tsunoda, Masahiro c/o NEC Communications System, Ltd.., Tokyo (JP); Ooi, Mitsuyoshi c/o NEC Corporation, Tokyo (JP)
(74) Representative: Baronetzky, Klaus

(56) References cited:
- GB-A- 1 057 249
- US-A- 5 867 372
- PATENT ABSTRACTS OF JAPAN vol. 018, no. 120 (E-1516), 25 February 1994 (1994-02-25) -& JP 05 315775 A (FUJITSU LTD), 26 November 1993 (1993-11-26)

## Description

### BACKGROUND OF THE INVENTION

### 1. Field of the Invention

The present invention relates to a structure for supplying power to a communication device such as an electronic exchange.

### 2. Description of the Related Art

Conventionally a variety of technologies of a power supplying structure for supplying power to a plurality of communication devices have been developed and put to practical use for a purpose of saving a required wiring space and improving work efficiency in wiring of power supplying cables. Such conventional technologies are, for example, disclosed in the following Japanese utility models: JP 60-59580 U and JP 62-89192 U, and in document GB-A-1,057,249.

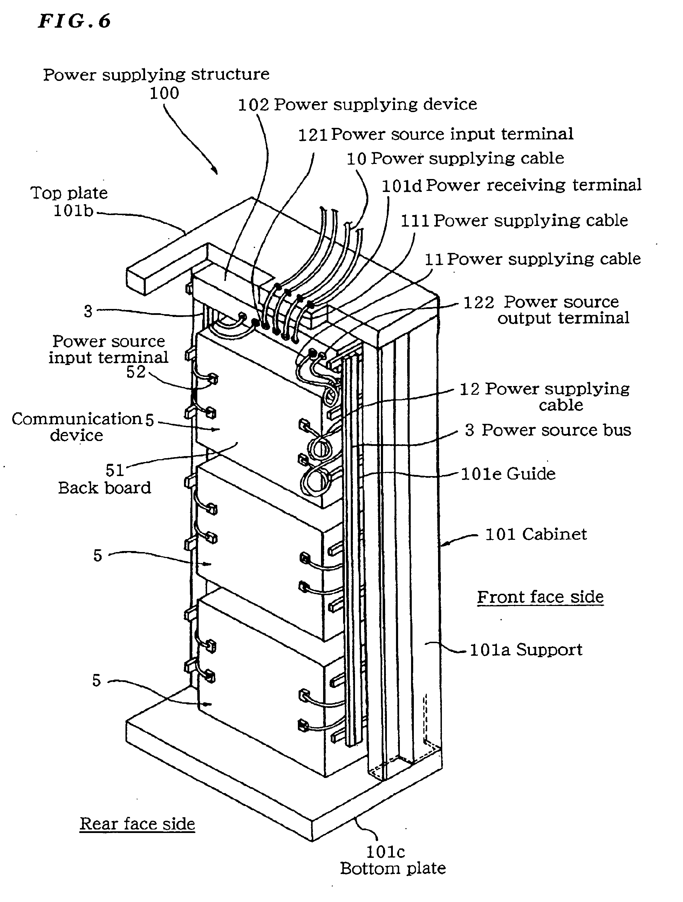

FIG. 6 is a schematic perspective view for showing a conventional communication device power supplying structure. As shown in FIG. 6, a power supplying structure 100 is used to supply power to a communication device such as an electronic exchange and comprises a cabinet 101 including support 101a, a top plate 101b, and a bottom plate 101c, a power supplying device 102, a power source bus 3, and a communication device 5 which are mounted on this cabinet 101, and power supplying cables 10, 111, 11, and 12 connected to these power supplying device 102, power source bus 3, and communication devices 5.

In FIG. 6, for easy understanding, these power supplying cables 10, 111, 11, and 12 are shown fewer in number than actually are and their extra portions are omitted partially.

The cabinet 101 has such a construction that two supports 101a are provided as projected respectively at the two ends of the front face of the bottom plate 101c and the top plate 101b is attached on the upper ends of these support 101a.

In the front face of each of these support 101a is formed a screw hole, not shown, for fitting the communication device 5 in order to support a plurality of the communication devices 5.

Furthermore, the support 101a has a one-cycle rectangular wave-shaped cross section to thereby keep a sufficient mechanical strength.

The cabinet 101, meanwhile, is provided with a rod-shaped guide 101e on the mutually opposing faces of the supports 101a in such a configuration that the power supplying device 102 and the communication device 5 can move back and forth as supported by the guide 101e, thus facilitating attachment and detachment of the power supplying device 102 and the communication device 5.

Furthermore, the cabinet 101 is provided on the back face of the top plate 101b with a power receiving terminal 101d, which is connected through the power supplying cable 10 to an external power source terminal (not shown).

The power supplying device 102 is provided on its rear face with a power source input terminal 121 and a power source output terminal 122.

Furthermore, the power supplying device 102 is mounted on the top stage of the cabinet 101 as supported by the guide 101e from the rear face side of the cabinet 101 in such a manner that the front face of the power supplying device 102 may face the front side of the cabinet 101.

In this configuration, the power supplying cable 111 interconnects the power receiving terminal 101d and the power source input terminal 121.

The power source bus 3 is elongated in shape and mounted vertically on the outside of the guide 101e on the rear face side of the support 101a.

In this configuration, the power supplying cable 11 interconnects the power source output terminal 122 and the power source bus 3 provided on the rear face of the power supplying device 102.

In mounting, the communication device 5 is inserted into the cabinet 101 from its front side as supported by the guide 101e.

The communication device 5 is mounted with a back board 51, which is provided with a power source input terminal 52.

In this configuration, the power supplying cable 12 interconnects the power source bus 3 and the power source input terminal 52 of each of the communication devices 5.

Thus, in the power supplying structure 100 having the above-mentioned configuration, external power is supplied to each of the communication devices 5 through the power supplying cable 10, the power receiving terminal 101d, the power supplying cable 111, the power source input terminal 121, the power source output terminal 122, the power supplying cable 11, the power source bus 3, the power supplying cable 12, and the power source input terminal 52 in this order.

Note here that in inspection/maintenance of the communication device 5, its back board 51 is removed, so that its rear side space cannot be used as a space to wire the above-mentioned power supplying cables therein in this power supplying structure 100.

Accordingly, the power supplying cables 11 and 12 have been wired in the rear side space of the support 101a conventionally.

The power supplying structure 100, however, has the power source bus 3 as provided on the rear face side of the support 101a and so has a small space for wiring the power supplying cables 11 and 12 therein, thus giving rise to problems of the power supplying cables 11 and 12 not being able to be wired or poor work efficiency in wiring.

Furthermore, the power supplying structure 100 has the power source input terminal 21 and the power source output terminal 122 on the rear face of the power supplying device 102, so that the power supplying cables 111 and 11 are congregated in an apparently congested manner or that an extra portion of the power supplying cable 12 which interconnects the power source bus 3 and each of the communication devices 5 must be disposed in the small space on the rear side of the supports 101a, thus giving rise to a problem of undesirable outer appearances on the rear face side.

### SUMMARY OF THE INVENTION

It is an object of the present invention to provide a communication device power supplying structure which solves the above-mentioned problems of the conventional technologies, wherein a power source bus is stored in a support of a cabinet to expand a power supplying cable wiring space on the rear side in order to increase the number of the power supplying cables that can be wired, thus improving the work efficiency in wiring and the outer appearances after wiring.

A communication device power supplying structure according to present invention is defined in claim 1, comprising: a support formed by combining a plurality of posts having a roughly U-shaped cross section, for mounting a communication device thereon; and a power source bus stored in one of said plurality of posts, for supplying power from a power supplying device to said communication device.

According to above mentioned configuration, the power source bus can be stored in the support to expand the power supplying cable wiring space on the rear side of the support, thus increasing the number of the power supplying cables that can be wired and also improving work efficiency in wiring.

Moreover, the communication device power supplying structure according to present invention, wherein a power source input terminal and a power source output terminal of said power supplying device are arranged on a front face and a rear face of said power supplying device respectively and separately.

According to above mentioned configuration, the power supplying cable connected with a power source input terminal and that connected to a power source output terminal can be wired on different faces, thus expanding their respective wiring space and also improving work efficiency in wiring.

Moreover, the communication device power supplying structure according to present invention, wherein: said support having a structure formed by combining a first post and a second post which are roughly U-shaped so that a cross-section thereof may be one-cycle rectangular wave-shaped; said power source bus is stored in said first post; and said power supplying device is mounted in such a manner that said power source output terminal may be positioned on a side of a front face of said support.

According to above mentioned configuration, the power supplying cable which interconnects the power source output terminal of a power supplying device and the power source bus can be wired in a space on the front side of the support, thus avoiding a disadvantage of giving a feeling of congested outer appearances owing to the power supplying cables being wired at random behind the support.

Moreover, the communication device power supplying structure according to present invention, wherein said power supplying device is provided with a fitting flange for mounting said power supplying device to a rear face of said support, to be mounted to said support from the rear face side of said support.

According to above mentioned configuration, the power supplying cable connected at the power source output terminal of the power supplying device can be passed through below the front face of the power supplying device and connected to the power source bus, so that it can be easily wired in a space on the front side of the support.

Moreover, the communication device power supplying structure according to present invention, further comprising a cable duct for storing a power supplying cable which interconnects said power source bus and said communication device.

According to above mentioned configuration, the power supplying cables can be properly arranged easily, thus improving work efficiency in wiring.

Moreover, the communication device power supplying structure according to present invention, wherein said cable duct is provided between a side face of said communication device and said support.

According to above mentioned configuration, an extra portion of the power supplying cable interconnecting the power source bus and a communication device can be disposed in a space between the side face of the communication device and the support, thus avoiding a disadvantage of undesirable outer appearances on the rear side of the support.

Furthermore, the communication device power supplying structure according to present invention, wherein an opening is formed in a side face of said communication device, for inspection/maintenance of a connector which is connected with said power source bus.

According to above mentioned configuration, it is possible to inspect and maintain only a power source cable connector without removing the power supplying cable connected to the power source bus, thus improving work efficiency in inspection/maintenance.

### BRIEF DESCRIPTION OF THE DRAWINGS

FIG. 1 is a schematic perspective view for showing an embodiment of a communication device power supplying structure related to the present invention;
FIGS. 2 are schematic diagrams for showing a power supplying device of the power supplying structure related to the present invention, FIG. 2A is a perspective view as seen upward on a front side and FIG. 2B is a perspective view as seen downward from a rear side;
FIG. 3 is a schematic perspective view for showing a power source bus and a power supplying cable for interconnecting the power supplying device and the power source bus in the power supplying structure related to the present invention;
FIG. 4 is a schematic perspective view for showing a cable duct and the power supplying cable for interconnecting a power source bus 3 and a communication device in the power supplying structure related to the present invention;
FIG. 5 is a schematic perspective view for showing a side face construction of a communication device and a construction for interconnecting a power source bus and a power supplying cable connector in the power supplying structure related to the present invention; and
FIG. 6 is a schematic perspective view for showing a conventional communication device power supplying structure.

### DESCRIPTION OF THE PREFERRED EMBODIMENTS

The following will describe preferred embodiments of a communication device power supplying structure related to the present invention with reference to drawings.

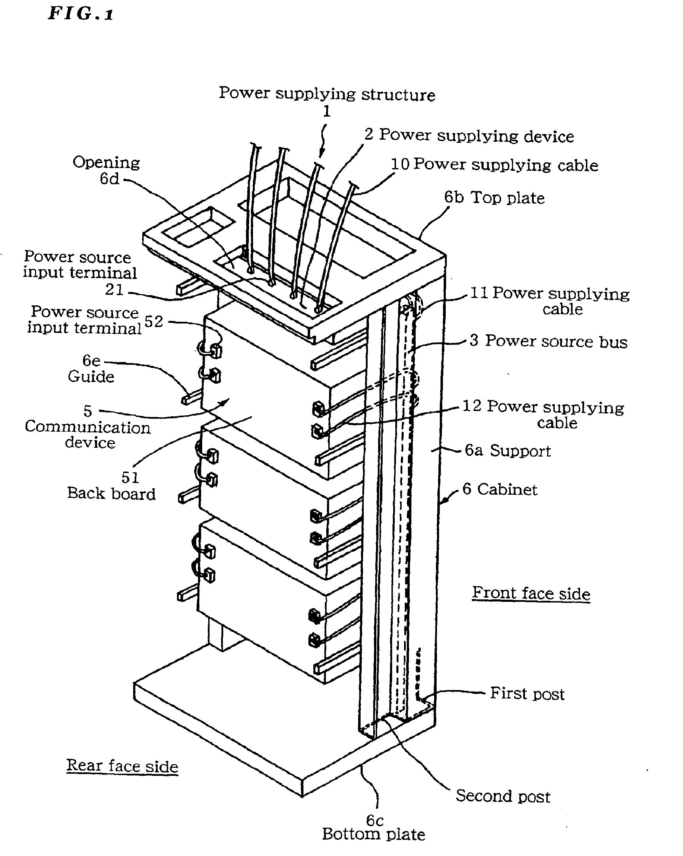

FIG. 1 is a schematic perspective view for showing an embodiment of a communication device power supplying structure related to the present invention. As shown in FIG. 1, a communication device power supplying structure 1 of the present embodiment comprises a cabinet 6 provided with a support 6a, a power supplying device 2 mounted to the cabinet 6, a power source bus 3 stored in the support 6a, a communication devices 5 mounted to the cabinet 6, a power supplying cable 10 for interconnecting an external power source (not shown) and the power supplying device 2, a power supplying cable 11 for interconnecting the power supplying device 2 and the power source bus 3, and a power supplying cable 12 for interconnecting the power source bus 3 and the communication device 5.

Note here that in FIG. 1, the power supplying cables 10, 11, and 12 are shown fewer in number so that the power supplying structure 1 can be understood easily.

The cabinet 6 has such a construction that the two supports 6a are provided as projected respectively at the two ends of the front face of a bottom plate 6c and a top plate 6b is attached on the upper ends of these supports 6a.

Each support 6a is formed by combining first and second posts having a U-shaped cross section so as to provide a one-cycle rectangular wave-shaped cross section, to enable improving its own mechanical strength, thus supporting the power supplying device 2 as well as the plurality of communication devices 5.

Furthermore, to thus provide the one-cycle rectangular wave-shaped cross section, the first and second posts are integrally formed by pressing.

Note here that the support 6a is not limited in construction to this integrally formed construction; for example, the first and second posts can be formed separately and then joined with each other by welding etc.

Furthermore, the supports 6a each store in their first post the power source bus 3 for supplying power from the power supplying device 2 to the communication devices 5 to enable expanding a space for wiring therein the power supplying cable 12 on the rear side of the supports 6a, thus increasing the number of the power supplying cables that can be wired and also improving work efficiency in wiring thereof.

The cabinet 6, meanwhile, is provided with a rod-shaped guide 6e on the mutually opposing faces of the supports 6a in such a configuration that the power supplying device 2 and the communication device 5 can move back and forth as supported by the guide 6e, thus facilitating attachment and detachment of the power supplying device 2 and the communication device 5.

Furthermore, the top plate 6b of the cabinet 6 has an opening 6d formed in the rear side for inserting the power supplying cables 10 therethrough so that they may be connected with a power source input terminal 21 of the power supplying device 2.

By thus inserting the power supplying cables 10 through the opening 6d, they can be packed into it effectively and so arranged properly in wiring.

Note here that the support 6a is not limited to the above shape in cross section but may be of any shape as far as it is capable of storing the power source bus 3 in the support.

The following will describe the power supplying device with reference to the drawings.

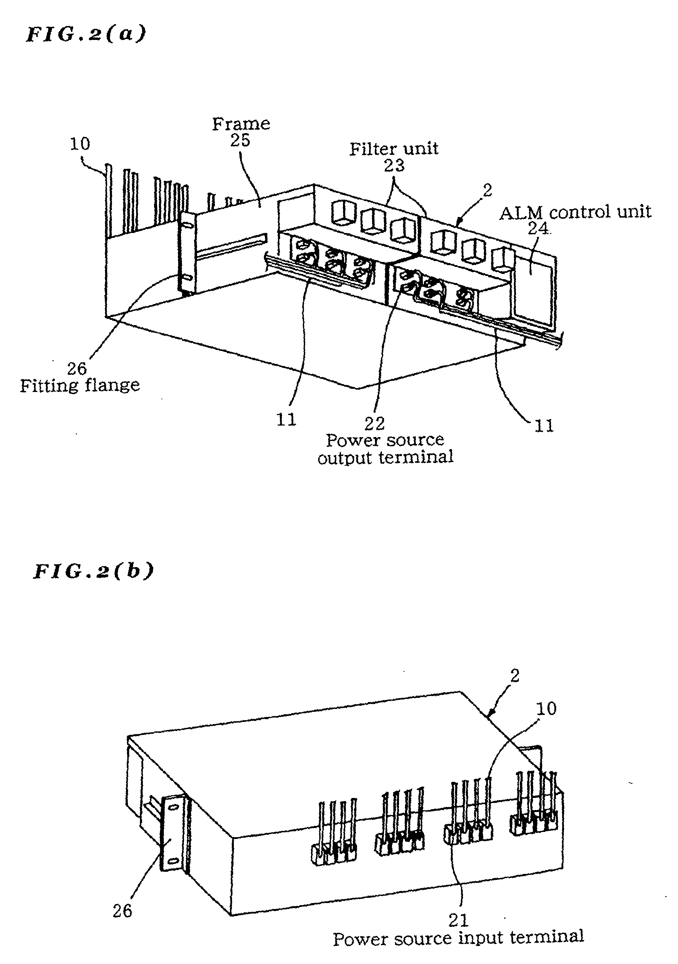

FIGS. 2 are schematic diagrams for showing a power supplying device of the power supplying structure related to the present invention, FIG. 2A is a perspective view as seen upward on a front side and FIG. 2B is a perspective view as seen downward from a rear side.

As shown in FIGS. 2, the power supplying device 2 comprises a power source input terminal 21 on its front face and a power source output terminal 22 on its rear face in configuration.

In this configuration, the power supplying cable 10 connected with the power source input terminal 21 and the power supplying cable 11 connected to the power source output terminal 22 are wired on the different faces to thereby enable expanding the respective power supplying cable wiring space, thus improving work efficiency in wiring.

Although this embodiment has the power source input terminal 21 on the front face and the power source output terminal 22 on the rear face in configuration, it is not limited to this configuration; for example, the power source input terminal 21 and the power source output terminal 22 may be arranged on the rear and front faces respectively. In this case also, the power supplying cable 10 connected to the power source input terminal 21 and the power supplying cable 11 connected to the power source output terminal 22 are arranged in the different spaces, thus expanding their respective wiring capacities.

Furthermore, the power supplying device 2 has the external power supplying cable 10 directly connected to the power source input terminal 21 and so need not wire the power supplying cable 111 in contrast to the case of the conventional power supplying structure 100 to thereby enable reducing the manufacturing cost of power supplying cables and of wiring thereof and also does it have no power supplying cables other than the power supplying cable 10 on its rear face to thereby enable avoiding a disadvantage of giving a feeling of congested outer appearances.

Furthermore, the power supplying device 2 comprises two filter units 23 for system-0 and system-1 each, an ALM control unit 24, and a frame 25 for housing them, which filter units 23 are each mounted with the power source output terminal 22 at which is connected the power supplying cable 11 for supplying power to the power source bus 3.

Furthermore, roughly at the middle of the frame 25 on the rear face side of the supports 6a of the cabinet 6 is provided as projected a fitting flange 26 for screwing substantially at the middle of the frame 25 is provided as projected a fitting flange 26 for screwing to fix the power supplying device 2 on the rear face side of the supports 6a of the cabinet 6. Thus, the flange is not provided on the front face side so that it may not come in the wiring space for the power supplying cable 11 in construction, thus enabling improving work efficiency in wiring of the power supplying cable 11.

That is, the power supplying device 2 is inserted into the cabinet 6 from its rear side and does not have the fitting flange on its front face side in construction but has the power source output terminal 22 on its front face. Accordingly, a man engaged in wiring can pass the power supplying cable 11 connected to the power source output terminal 22 of the power supplying device 2 below the front face of the power supplying device 2 to connect it with the power source bus 3, thus easily wiring the power supplying cable which interconnects the power source output terminal 22 and the power source bus 3 in the space in front of the supports 6a.

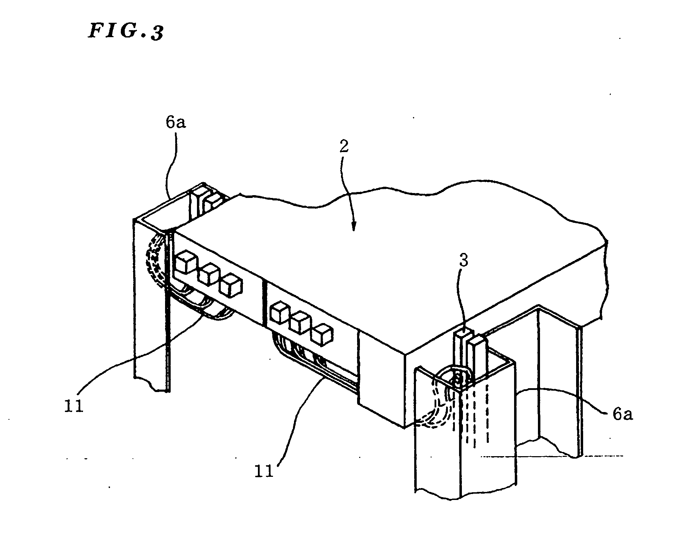

In this case, as shown in FIG. 3, in configuration, preferably the supports 6a are arranged as opposed to each other in such a manner that their respective first posts may face the front side and the power source bus 3 is stored in the first post of the support 6a and also the power supplying device 2 is mounted in such a manner that its power source output terminal 22 may face the front side. In such a configuration, the power supplying cable 11 which interconnects the power source output terminal 22 of the power supplying device 2 and the power source bus 3 can be wired in the space on the front side of the supports 6a, thus avoiding a disadvantage of giving a feeling of congested outer appearances due to the power supplying cables being wired at random on the rear side of the supports.

More preferably, as shown in FIGS. 2, in configuration, the supports 6a are thus arranged and also the power source bus 3 is stored in the first post of the support 6a; moreover, the power supplying device 2 is provided with the fitting flange 23 for mounting it to the rear face of the support 6a so that it can be mounted thereto from the rear face side. In such a configuration, the power source output terminal 22 of the power supplying device 2 and the power source bus 3 are closer to each other, to permit the man engaged in wiring to more easily wire the power supplying cable 11 which interconnects the power source output terminal 22 and the power source bus 3.

The following will describe the cable duct etc. with reference to the drawings.

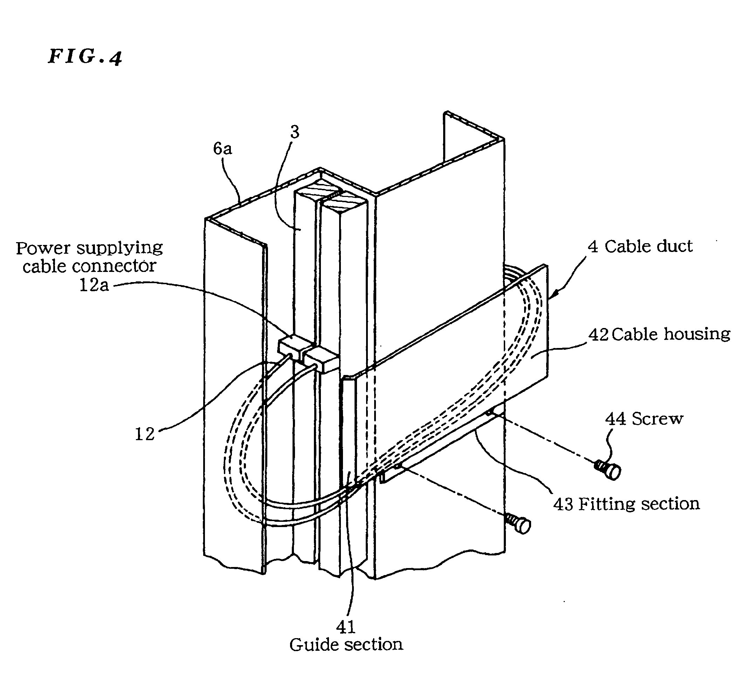

FIG. 4 is a schematic perspective view for showing a cable duct and the power supplying cable for interconnecting a power source bus 3 and a communication device in the power supplying structure related to the present invention.

As shown in FIG. 4, a cable duct 4 comprises a guide section 41 for guiding the communication device 5 when it is mounted, a cable housing 42 for storing the power supplying cable 12, and a fitting section 43. Furthermore, the cable duct 4 is fixed to the support 6a of the cabinet 6 using, for example, a screw 44.

In such a manner, the cable duct 4 for storing the power supplying cable 12 which interconnects the power source bus 3 and the communication device 5 is provided, thus making it possible to arrange the power supplying cables 12 properly and improve work efficiency in wiring.

Furthermore, the cable duct 4 is provided between the side face of the communication device 5 and the supports 6a, so that in place of a small space behind the rear face of the supports 6a a space between the side face of the communication device 5 and the supports 6a can be utilized to store an extra portion of the power supplying cable 12 which interconnects each of the communication devices 5 and the power source bus 3, thus avoiding a disadvantage of undesirable outer appearances behind the rear face of the supports 6a.

Furthermore, although the power supplying cable 12 may possibly be caught by the communication device 5 and disconnected in attachment and detachment of the communication device 5 because it is connected via a power supplying cable connector 12a to the power source bus 3 through the space between the supports 6a and the side face of the communication device 5, the cable duct 4 can be provided to exclude the possibility of disconnection of the cable.

Furthermore, the cable duct 4 is provided with the guide section 41 for guiding the communication device 5 when it is mounted, so that even if the cable duct 4 comes in contact with the communication device 5, such a trouble can be avoided that the communication device 5 cannot be mounted or that the cable duct 4 is damaged.

Furthermore, although not shown, the cable duct 4 can store the extra portion of the power supplying cable 12 in the space between the side faces of the supports 6a and the cable housing 42, thus more effectively avoiding a disadvantage of undesirable outer appearances on the read face side of the supports 6a.

The following will describe the side face construction etc. of the communication device with reference to the drawings.

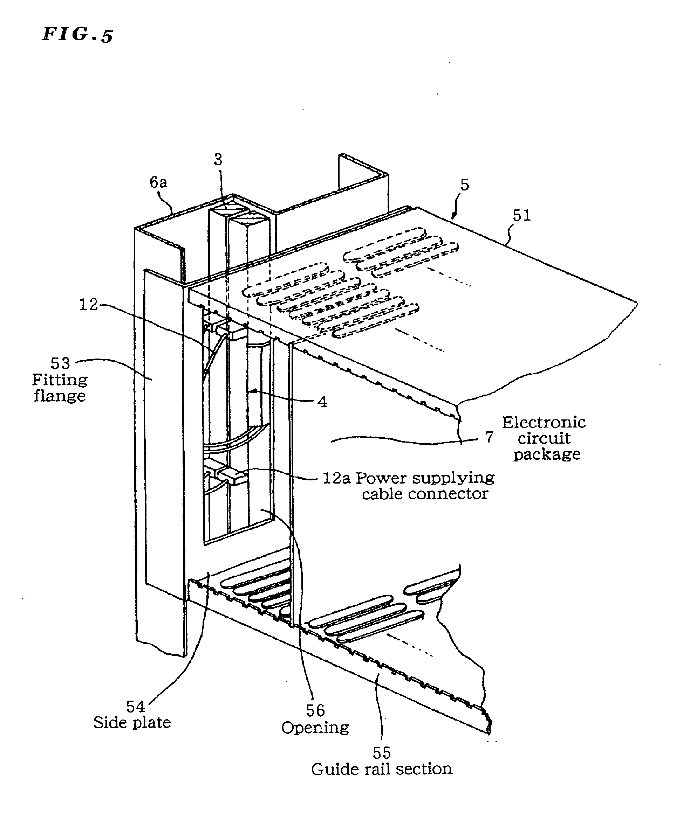

FIG. 5 is a schematic perspective view for showing a side face construction of a communication device and a construction for interconnecting a power source bus and a power supplying cable connector in the power supplying structure related to the present invention.

In FIG. 5, the communication device 5 comprises a back board 51, a side plate 54 on which the fitting flange 53 is provided as projected, and a guide rail section 55 arranged as opposed to the back board 51 for mounting a plurality of electronic circuit packages 7 in a book shelving manner therebetween, with an opening 56 formed in each of the side plates 54 for inspection/maintenance of the power supplying cable connector 12a connected to the power source bus 3 in configuration.

This opening is thus provided to thereby enable inspecting and maintaining only the power source cable connector 12a without removing the power source cable 12 connected with the power source bus 3, thus improving work efficiency of inspection/maintenance.

In the communication device power supplying structure 1 having the above-mentioned configuration, the external power supplying cable 10 is directly connected to the power source input terminal 21 on the rear face of the power supplying device 2.

It is thus possible to reduce the costs of manufacturing of the power supplying cables and wiring thereof, accompanied by no power supplying cables being provided other than the power supplying cable 10 on the rear face of the power supplying device 2, thereby avoiding a disadvantage of giving a feeling of congested outer appearances.

Furthermore, the power supplying device 2 has the power source input terminal 21 disposed on its rear face and the power source output terminal 22 disposed on its front face to thereby avoid a disadvantage of congested outer appearances owing to the power supplying cables wired around at random behind the rear face of the support; moreover, the power supplying cable 11 connected to the power source output terminal 22 of the power supplying device 2 can be passed through below the front face of the power supplying device 2 to be connected with the power source bus 3, thus making it possible to easily wire the power supplying cable 11 in the space on the front face side of the supports 6a.

Furthermore, the power source bus 3 is stored in the support 6a to thereby expand the wiring space behind the support 6, thus enabling increasing the number of the power supplying cables 12 that can be wired.

Furthermore, in the power supplying structure 1, the cable duct 4 which stores the power supplying cable 12 interconnecting the power source bus 3 and the communication device 5 is disposed between the side face of the communication device 5 and the supports 6a to thereby enable arranging the power supplying cables 12 properly. Furthermore, the power supplying structure 1 is capable of storing the extra portion of the power supplying cable 12 in the space between the side face of the communication device 5 and the supports 6a, thus avoiding a disadvantage of undesirable outer appearances on the rear face side of the supports 6a.

Furthermore, in the power supplying structure 1, the opening 56 is formed in the side face of the communication device 5 for maintenance of the power supplying cable connector 12a connected with the power source bus 3 to thereby enable inspecting and maintaining only the power supplying cable connector 12a without removing the power supplying cable 12, thus improving work efficiency in inspection/maintenance.

As described above, by the present invention, the power source bus 3 is stored in the first post of the support 6a, thus expanding the wiring space behind the supports 6a of the cabinet 6 because the power source bus 3 is not present there.

Furthermore, the power source output terminal 22 of the power supplying device 2 is disposed on the front face, below which is passed through the power supplying cable 11 connected with the power source output terminal 22 and connected to the power source bus 3 on both side faces, thus enabling improving work efficiency in wiring.

Furthermore, the extra portion of the power supplying cable 12 between the power source bus 3 and each of the communication devices 5 is wired preferably near the power source bus 3 or more preferably through the cable duct 4, thus enabling improving the outer appearances as viewed from the rear side.

As described above, in the communication device power supplying structure of the present invention, the power source bus can be stored in the supports of the cabinet to thereby expand the wiring space behind them, thus increasing the number of power supplying cables that can be wired and also improving work efficiency in wiring.

Furthermore, the power supplying cable which interconnects the power source bus and each of the communication devices can be stored in the cable duct provided between the cabinet supports and each of the communication devices to thereby wire the extra portion of the power supplying cable, thus improving the outer appearances after wiring.

Although the present invention has been described with reference to a specific embodiment, many modifications and variations therein will be readily apparent to those of ordinary skill in this technological field. Accordingly, all such variations and modifications are included within the scope of the present invention as defined by the following claims.

## Claims

1. A communication device power supplying structure comprising:
- a cabinet (6) having a bottom plate (6c) and a support (6a) fixed on said bottom plate (6c);
- a power supplying device (2) and at least one communication device (5), both mounted to said cabinet (6),
c h a r a c t e r i z e d in that said support (6a) having a structure formed by combining a first post and a second post which are U-shaped, so that a cross-section thereof may be one-cycle rectangular wave-shaped, wherein a power source bus (3) is stored in one of said posts, for supplying power from said power supplying device (2) to the at least one communication device (5).

2. The communication device power supplying structure according to claim 1,
c h a r a c t e r i z e d in that the power supplying device (2) is connected to the power source bus (3) via a power supplying cable (11).

3. The communication device power supplying structure according to claim 2, wherein a power source input terminal (21) of said power supplying device (2) and a power source output terminal (22) to which said power supplying cable (11) is connected are arranged on a front face and a rear face of said power supplying device (2) respectively and separately.

4. The communication device power supplying structure according to one of the preceding claims,
**characterized in that** said power supplying device (2) is mounted in such a manner that a power source output terminal (22) may be positioned on a side of a front face of said support (6a).

5. The communication device power supplying structure according to one of the preceding claims,
**characterized in that** said power supplying device is provided with a fitting flange (26) for mounting said power supplying device (2) to a rear face of said support (6a), to be mounted to said support (6a) from the rear face side of said support (6a).

6. The communication device power supplying structure according to one of the preceding claims,
**characterized by** further comprising a cable duct (4) for storing a power supplying cable (12) which interconnects said power source bus (3) and said communication device (5).

7. The communication device power supplying structure according to claim 6,
**characterized in that** said cable duct (4) is provided, between a side face of said communication device (5) and said support (6a).

8. The communication device power supplying structure according to one of the preceding claims,
**characterized in that** an opening (56) is formed in a side face (54) of said communication device (5), for inspection/maintenance of a connection which is connected with said power source bus (3).

## Patentansprüche

1. Stromversorgungsstruktur für eine Kommunikationsvorrichtung, die Folgendes umfasst:
ein Gehäuse (6) mit einer Bodenplatte (6c) und einem Träger (6a), der auf der Bodenplatte (6c) befestigt ist;
eine Stromversorgungsvorrichtung (2) und mindestens eine Kommunikationsvorrichtung (5), die beide an dem Gehäuse (6) befestigt sind, **dadurch gekennzeichnet, dass** der Träger (6a) eine Struktur aufweist, die durch eine Verbindung eines ersten Pfostens und eines zweiten Pfostens, die U-förmig sind, gebildet wird, so dass ein Querschnitt davon Einzyklus-Rechteckwellenförmig sein kann, wobei ein Stromquellenbus (3) in einer der Pfosten untergebracht ist, um Strom von der Stromversorgungsvorrichtung (2) an die mindestens eine Kommunikationsvorrichtung (5) zu leiten.

2. Stromversorgungsstruktur für eine Kommunikationsvorrichtung nach Anspruch 1, **dadurch gekennzeichnet, dass** die Stromversorgungsstruktur (2) über ein Stromversorgungskabel (11) mit dem Stromquellenbus (3) verbunden ist.

3. Stromversorgungsstruktur für eine Kommunikationsvorrichtung nach Anspruch 2, **dadurch gekennzeichnet, dass** ein Stromversorgungseingangsanschluss (21) der Stromversorgungsstruktur (2) und ein Stromquellenausgangsanschluss (22), mit welchen das Stromversorgungskabel (11) verbunden ist, auf einer Vorderfläche bzw. einer Rückfläche der Stromversorgungsvorrichtung (2) separat angeordnet sind.

4. Stromversorgungsstruktur für eine Kommunikationsvorrichtung nach einem der vorhergehenden Ansprüche, **dadurch gekennzeichnet, dass** die Stromversorgungsvorrichtung (2) auf eine solche Weise befestigt ist, dass ein Stromquellenausgangsanschluss (22) auf einer Seite der Vorderfläche des Trägers (6a) befestigt sein kann.

5. Stromversorgungsstruktur für eine Kommunikationsvorrichtung nach einem der vorhergehenden Ansprüche, **dadurch gekennzeichnet, dass** die Stromversorgungsvorrichtung (2) mit einem Anpassungsflansch (26) ausgestattet ist, um die Stromversorgungsvorrichtung (2) auf einer Rückfläche des Trägers (6a) zu befestigen, damit diese von der Rückflächenseite des Trägers (6a) aus an dem Träger (6a) befestigt wird.

6. Stromversorgungsstruktur für eine Kommunikationsvorrichtung nach einem der vorhergehenden Ansprüche, welche des Weiteren eine Kabelführung (4) zum Aufnehmen eines Stromversorgungskabels (12) aufweist, das den Stromquellenbus (3) und die Kommunikationsvorrichtung (5) miteinander verbindet.

7. Stromversorgungsstruktur für eine Kommunikationsvorrichtung nach Anspruch 6, **dadurch gekennzeichnet, dass** die Kabelführung (4) zwischen einer Seitenfläche der Kommunikationsvorrichtung (5) und dem Träger (6a) bereitgestellt wird.

8. Stromversorgungsstruktur für eine Kommunikationsvorrichtung nach einem der vorhergehenden Ansprüche, **dadurch gekennzeichnet, dass** eine Öffnung (56) in einer Seitenfläche (54) der Kommunikationsvorrichtung (5) zur Inspektion/Wartung einer Verbindung, die mit dem Stromquellenbus (3) verbunden ist, ausgebildet ist.

## Revendications

1. Structure d'alimentation en énergie pour dispositif de communication, comprenant :
- un boîtier (6) comportant une plaque de fond (6c) et un support (6a) fixé sur ladite plaque de fond (6c) ;
- un dispositif d'alimentation en énergie (2) et au moins un dispositif de communication (5), les deux étant installés sur ledit boîtier (6),
**caractérisée en ce que** ledit support (6a) présente une structure formée en combinant un premier montant et un deuxième montant qui ont une forme de U, de sorte que leur section transversale peut avoir une forme d'onde rectangulaire d'un cycle, dans laquelle un bus de source d'énergie (3) est rangé dans l'un desdits montants, pour fournir de l'énergie dudit dispositif d'alimentation en énergie (2) audit au moins un dispositif de communication (5).

2. Structure d'alimentation en énergie pour dispositif de communication selon la revendication 1, **caractérisée en ce que** le dispositif d'alimentation en énergie (2) est connecté au bus de source d'énergie (3) par l'intermédiaire d'un câble d'alimentation en énergie (11).

3. Structure d'alimentation en énergie pour dispositif de communication selon la revendication 2, dans laquelle une borne d'entrée de source d'énergie (21) dudit dispositif d'alimentation en énergie (2) et une borne de sortie de source d'énergie (22), à laquelle est connecté ledit câble d'alimentation en énergie (11), sont agencées sur une face avant et une face arrière dudit dispositif d'alimentation en énergie (2), respectivement et séparément.

4. Structure d'alimentation en énergie pour dispositif de communication selon l'une quelconque des revendications précédentes, **caractérisée en ce que** ledit dispositif d'alimentation en énergie (2) est installé de telle manière qu'une borne de sortie de source d'énergie (22) peut être positionnée sur un côté d'une face avant dudit support (6a).

5. Structure d'alimentation en énergie pour dispositif de communication selon l'une quelconque des revendications précédentes, **caractérisée en ce que** ledit dispositif d'alimentation en énergie (2) est muni d'une bride d'ajustage (26) pour installer ledit dispositif d'alimentation en énergie (2) sur une face arrière dudit support (6a), à installer sur ledit support (6a) depuis le côté de la face arrière dudit support (6a).

6. Structure d'alimentation en énergie pour dispositif de communication selon l'une quelconque des revendications précédentes, **caractérisée en ce qu'**elle comprend en outre un conduit de câble (4) pour ranger un câble d'alimentation d'énergie (12) qui interconnecte ledit bus de source d'énergie (3) et ledit dispositif de communication (5).

7. Structure d'alimentation en énergie pour dispositif de communication selon la revendication 6, **caractérisée en ce que** ledit conduit de câble (4) est prévu entre une face latérale dudit dispositif de communication (5) et ledit support (6a).

8. Structure d'alimentation en énergie pour dispositif de communication selon l'une quelconque des revendications précédentes, **caractérisée en ce qu'**une ouverture (56) est formée dans une face latérale (54) dudit dispositif de communication (5) pour le contrôle/la maintenance d'une connexion qui est connectée audit bus de source d'énergie (3).
